# EUROPEAN PATENT APPLICATION

(11) **EP 4 852 289 A1**
(43) Date of publication of application: **09.12.2026**
(21) Application number: 26152347.6
(22) Date of filing: 16.01.2026
(51) Int. Cl.: H02M 3/156

(54) **WEARABLE ELECTRONIC DEVICE, POWER DEVICE AND OPERATION METHOD THEREOF**

(30) Priority: 03.06.2025 US 202519226156
(71) Applicant: HTC Corporation, Taoyuan City 330, (TW)
(72) Inventor: WU, Chuan-Li, 330 Taoyuan City (TW); CHIN, LungTing, 330 Taoyuan City (TW)
(74) Representative: Wagner & Geyer

(57) **Abstract**

A wearable electronic device, a power device and an operation method thereof are provided. The power device includes a voltage converting circuit and a power management circuit. The voltage converting circuit receives system power, determines whether to boost or pass the system power to generate supply power according to a voltage magnitude of the system power. The power management circuit is coupled to the voltage converting circuit, generates at least one operation power to at least one application circuit based on the supply power.

## Description

### Technical Field

The disclosure relates to a wearable electronic device, a power device, and an operation method thereof, and in particular relates to a wearable electronic device, a power device and an operation method thereof capable of reducing acoustic noise.

### Description of Related Art

A power device in a wearable electronic device receives system power through a power transmission wire. In the conventional technical field, a power device may generate a supply voltage through boost and buck voltage conversion operations. Since both boost and buck voltage conversion operations require frequent switching of switches, ripple voltage is generated on the generated supply voltage. These ripple voltages may resonate with passive components on the printed circuit board within the wearable electronic device and generate acoustic noise that affects user experience.

Furthermore, in the conventional technical field, a power management circuit receives the system power from the battery end through a power transmission wire. When the wearable electronic device operates under heavy load conditions, a relatively large current is provided on the power transmission wire, and a certain degree of voltage drop may occur in the system power. Under such conditions, the power management circuit may cease operation due to the voltage of the system power being too low, resulting in operational abnormalities in the wearable electronic device.

### SUMMARY

A wearable electronic device, a power device and an operation method thereof capable of reducing acoustic noise are provided in the invention.

The power device of the invention comprises a voltage converting circuit and a power management circuit. The voltage converting circuit receives system power and determines whether to boost or pass the system power to generate supply power according to a voltage magnitude of the system power. The power management circuit is coupled to the voltage converting circuit and generates at least one operation power to at least one application circuit based on the supply power.

The operation method of the power device of the invention comprises: providing a voltage converting circuit to determine whether to boost or pass system power to generate supply power according to a voltage magnitude of the system power; and providing a power management circuit to generate at least one operation power to at least one application circuit based on the supply power.

The wearable electronic device of the invention includes at least one application circuit and the power device as described above. The power device provides at least one operation power to at least one application circuit.

Based on the above, the power device of the invention boosts or bypasses the system power to generate the supply power by determining the voltage magnitude of the system power. In this way, the voltage converting circuit of the power device may eliminate the switching action required for a buck action, thereby effectively reducing the probability of noise generation.

### BRIEF DESCRIPTION OF THE DRAWINGS

FIG. 1 is a schematic diagram of a power device of an embodiment of the invention.
FIG. 2 is a schematic diagram of a wearable electronic device of an embodiment of the invention.
FIG. 3 is a schematic diagram of an implementation of a voltage converting circuit of an embodiment of the invention.
FIG. 4A and FIG. 4B are schematic diagrams of power ripples of a power device under different operating conditions of an embodiment of the invention.
FIG. 5 is a schematic diagram of a power device of another embodiment of the invention.
FIG. 6 is a flowchart of an operation method of a power device of an embodiment of the invention.

### DETAILED DESCRIPTION OF DISCLOSED EMBODIMENTS

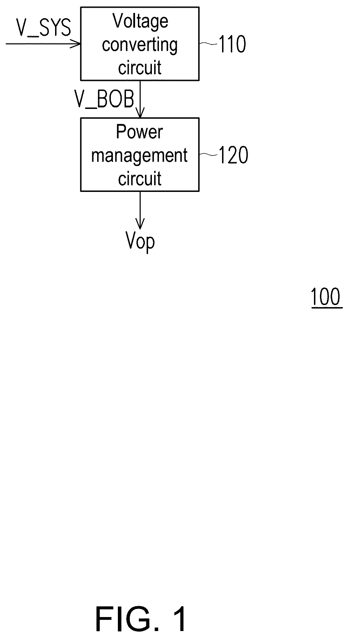

Referring to FIG. 1, FIG. 1 is a schematic diagram of a power device of an embodiment of the invention. The power device 100 includes a voltage converting circuit 110 and a power management circuit 120. The voltage converting circuit 110 receives a system power V_SYS. The voltage converting circuit 110 determines whether to boost or pass the system power V_SYS to generate the supply power V_BOB according to the voltage magnitude of the system power V_SYS. The power management circuit 120 is coupled to the voltage converting circuit 110. The power management circuit 120 generates at least one operation power Vop to at least one application circuit (not shown) based on the supply power V_BOB.

In terms of action details, the voltage converting circuit 110 may compare the voltage of the system power V_SYS with a preset threshold voltage, and determine whether to perform a boost action according to the comparison result. When the voltage converting circuit 110 determines that the voltage of the system power V_SYS is lower than the preset threshold voltage, the voltage converting circuit 110 may perform the boost action to generate the supply power V_BOB based on the system power V_SYS. The voltage of the supply power V_BOB may be higher than the voltage of the system power V_SYS.

On the other hand, when the voltage converting circuit 110 determines that the voltage of the system power V_SYS is not lower than the preset threshold voltage, the voltage converting circuit 110 may stop the boost action and bypass the system power V_SYS to generate the supply power V_BOB. Under such a condition, the system power V_SYS and the supply power V_BOB may have substantially the same voltage.

The power management circuit 120 may be a power management integrated circuit (PMIC). The power management circuit 120 does not receive the system power V_SYS, but receives the supply power V_BOB through the voltage converting circuit 110 coupled to each other, and generates one or more operation power Vop according to the supply power V_BOB. The power management circuit 120 may provide the operation power Vop to one or more application circuits in the system.

It is worth noting that, in this embodiment, the system power V_SYS may be provided by a power supply through a power transmission wire. Since the power transmission wire has a certain equivalent impedance, when the power device 100 operates in a relatively light load condition, the system power V_SYS may have a relatively small output current. Through the equivalent impedance on the power transmission wire, the voltage of the system power V_SYS may generate a relatively small voltage drop. In contrast, when the power device 100 operates in a relatively heavy load condition, the system power V_SYS may have a relatively large output current. Through the equivalent impedance on the power transmission wire, the voltage of the system power V_SYS may generate a relatively large voltage drop.

According to the above description, under heavy load condition, the voltage of the system power V_SYS may drop to a relatively low voltage value.

In this embodiment, the power management circuit 120 does not directly receive the system power V_SYS. Therefore, when the voltage of the system power V_SYS is reduced to a relatively low voltage value, the normal operation of the power management circuit 120 is not affected. Furthermore, when the voltage of the system power V_SYS drops below the preset threshold voltage, the voltage converting circuit 110 in this embodiment may generate a supply power V_BOB by performing a boost action to increase the voltage of the system power V_SYS, and provide the supply power V_BOB to the power management circuit 120, so that the power management circuit 120 may maintain normal operation.

On the other hand, under non-heavy load condition (light load or no load condition), the voltage converting circuit 110 may not perform the voltage conversion action, and transmit the system power V_SYS as the supply power V_BOB through a bypass method. As a result, the switching action of the voltage converting circuit 110 in a non-heavy load condition may be avoided, thereby reducing the acoustic noise that may be generated in the system.

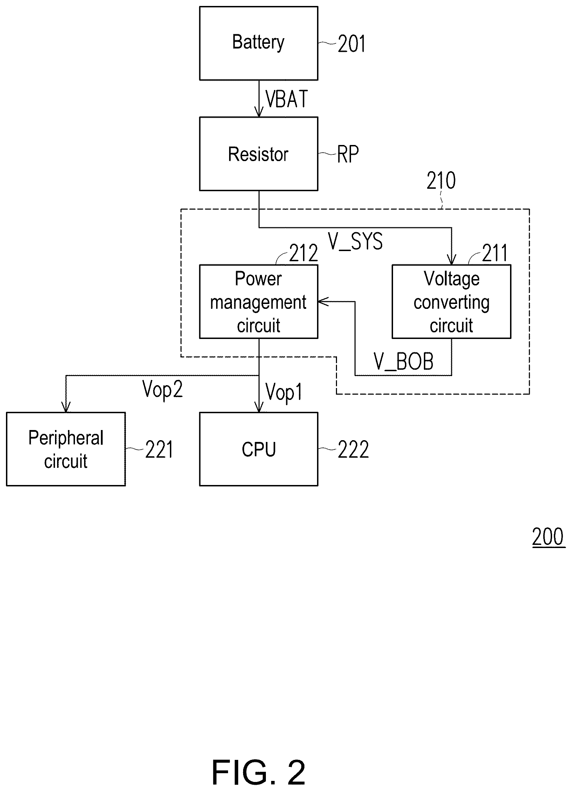

Referring to FIG. 2, FIG. 2 is a schematic diagram of a wearable electronic device of an embodiment of the invention. The wearable electronic device 200 includes a battery 201, a power device 210, a central processing unit (CPU) 221 as an application circuit, and a peripheral circuit 222. The battery 201 provides a power source VBAT to serve as a power supply, and transmits a system power V_SYS to the power device 210 through a power transmission wire. The power transmission wire has an equivalent resistor RP. The power device 210 includes a voltage converting circuit 211 and a power management circuit 212. The voltage converting circuit 211 receives the system power V_SYS through the equivalent resistor RP. The voltage converting circuit 211 generates the supply power V_BOB according to the voltage magnitude of the system power V_SYS. The voltage converting circuit 211 transmits the supply power V_BOB to the power management circuit 212. The power management circuit 212 may operate according to the supply power V_BOB and respectively provide operation power V op 1 and Vop2 to the central processing unit (CPU) 221 and the peripheral circuit 222.

The operation of the voltage converting circuit 211 and the power management circuit 212 in the power device 210 is similar to the operation of the voltage converting circuit 110 and the power management circuit 120 in the power device 100, and will not be repeated herein.

Incidentally, in this embodiment, the threshold voltage magnitude may be set according to the operating voltage magnitude that enables the normal operation of the power management circuit 212. The threshold voltage may be slightly greater than the minimum operable voltage of the power management circuit 212. Thus, the supply power V_BOB provided by the voltage converting circuit 211 may ensure the normal operation of the power management circuit 212.

Incidentally, the peripheral circuit 222 in this embodiment may be any form of peripheral circuit, and the number thereof may not be limited to one. The peripheral circuit 222 may be configured based on the functional requirements of the wearable electronic device 200. The voltages of the operation power Vop1 and Vop2 received by the central processing unit (CPU) 221 and the peripheral circuit 222 may be the same or different.

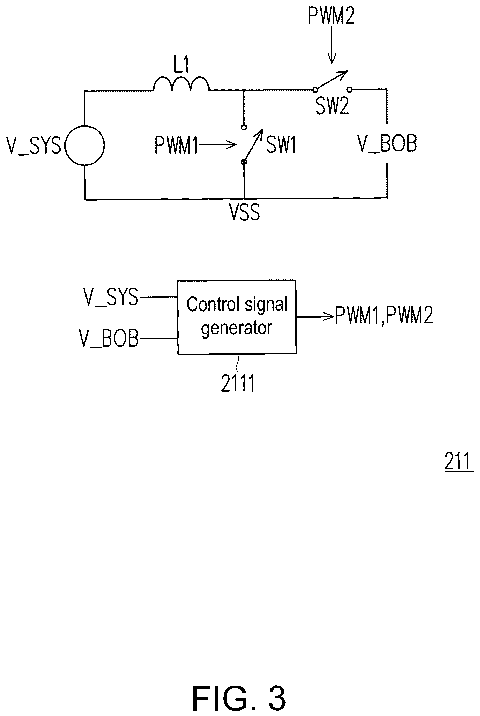

For implementation details of the voltage converting circuit 211, reference may be made to FIG. 3, which is a schematic diagram of an implementation of a voltage converting circuit of an embodiment of the invention. In FIG. 3, the voltage converting circuit 211 may be a DC to DC boost converter. The voltage converting circuit 211 includes an inductor L1, switches SW1 and SW2, and a control signal generator 2111. One end of the inductor L1 receives the system power V_SYS; the other end of the inductor L1 is coupled to the first ends of the switches SW1 and SW2; the second end of the switch SW2 generates a supply power V_BOB; the second end of the switch SW1 is connected to the reference ground terminal VSS. The switches SW1 and SW2 are controlled by control signals PWM1 and PWM2 respectively. When the boost action is performed, the control signals PWM1 and PWM2 may be pulse width modulation signals, and the phases of the control signals PWM1 and PWM2 are complementary to each other.

The control signal generator 2111 may generate control signals PWM1 and PWM2 according to the system power V_SYS and the supply power V_BOB. When the voltage of the system power V_SYS is lower than a preset threshold voltage, the control signal generator 2111 may generate control signals PWM1 and PWM2 as pulse width modulation signals. The switch SW1 is alternately turned on and off, and the switch SW2 is alternately turned off and on through the control signals PWM1 and PWM2, so as to perform a boost action based on the system power V_SYS and generate the supply power V_BOB. In addition, when the voltage of the supply power V_BOB reaches a target voltage (equal to the threshold voltage), the control signal generator 2111 may set the control signal PWM2 to a fixed voltage, thereby maintaining the switch SW2 to be turned off to stop performing the boost action.

On the other hand, when the voltage of the system power V_SYS is not lower than the preset threshold voltage, the control signal generator 2111 may generate the control signals PWM1 and PWM2 with constant voltages, thereby maintaining the switch SW1 to be turned off and the switch SW2 to be turned on. Under such conditions, the voltage converting circuit 211 may enable the system power V_SYS to bypass through the inductor L1 and the turned-on switch SW2 to the second end of the switch SW2, thereby generating the supply power V_BOB. At this time, the system power V_SYS and the supply power V_BOB may have substantially the same voltage value.

It is worth noting that the circuit diagram of the voltage converting circuit 211 in FIG. 3 is merely an illustrative example, and does not represent that the voltage converting circuit of the invention must be implemented using such a circuit. It should be noted that there are many different implementations of the DC to DC boost converter. Any DC to DC boost converter known to those skilled in the art may be applied to the embodiments of the invention without any particular limitation.

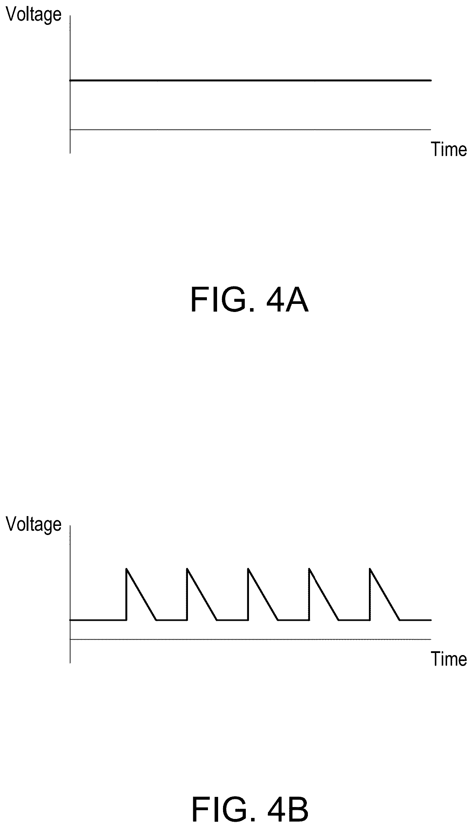

Referring to FIG. 4A and FIG. 4B, FIG. 4A and FIG. 4B are schematic diagrams of power ripples of a power device under different operating conditions of an embodiment of the invention. In FIG. 4A, when the voltage of the system power is not lower than a preset threshold voltage (light load condition), the voltage converting circuit does not perform a voltage conversion action, so the power (e.g., supply power) on the power device does not have a ripple phenomenon, and therefore, no acoustic noise is generated.

In FIG. 4B, when the voltage of the system power is lower than the preset threshold voltage (heavy load condition), the voltage converting circuit is required to perform a voltage conversion action, so the power (e.g., supply power) on the power device may have a ripple phenomenon.

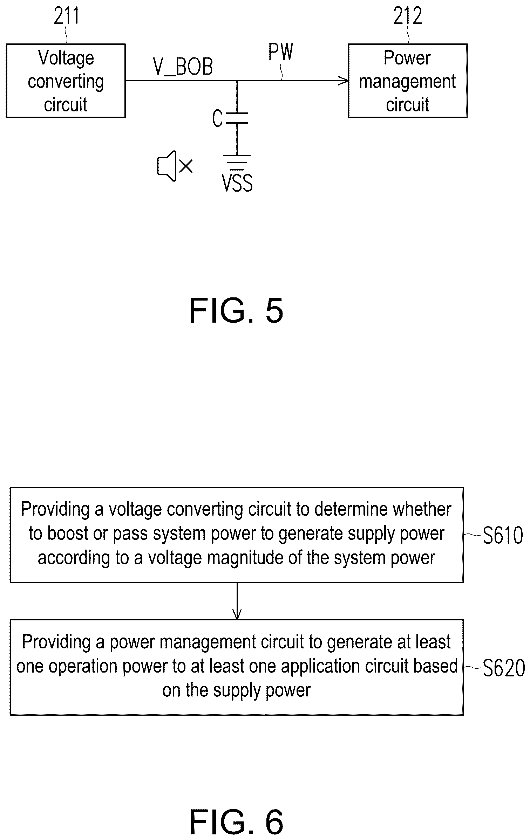

Referring to FIG. 5 below, FIG. 5 is a schematic diagram of a power device of another embodiment of the invention. The voltage converting circuit 211 is coupled to the power management circuit 212 through the power transmission wire PW, and transmits the supply power V_BOB through the power transmission wire PW. In order to further reduce the acoustic noise that may be generated by the power device, the power device may set a capacitor C between the power transmission wire PW and the reference ground terminal VSS. The capacitor C may be, for example, a noise-resistant multilayer ceramic capacitor (MLCC).

Referring to FIG. 6 below, FIG. 6 is a flowchart of an operation method of a power device of an embodiment of the invention. In step S610, a voltage converting circuit is provided to determine whether to boost or to pass the system power to generate the supply power according to the voltage magnitude of the system power. In step S620, a power management circuit is provided to generate at least one operation power to at least one application circuit based on the supply power.

The implementation details of steps S610 and S620 have been described in detail in the foregoing embodiments and implementation method, and are not be repeated herein.

To sum up, in the power device of the invention, the voltage converting circuit boosts or bypasses the system power to generate the supply power by determining the voltage magnitude of the system power. In this way, the power device may ensure that the power management circuit may receive a sufficiently high supply power and may maintain normal operation. The voltage converting circuit of the power device may eliminate the switching action required for a buck action, thereby effectively reducing the probability of noise generation.

## Claims

1. A power device, comprising:
a voltage converting circuit, receiving system power and determining whether to boost or pass the system power to generate supply power according to a voltage magnitude of the system power; and
a power management circuit, coupled to the voltage converting circuit and generating at least one operation power to at least one application circuit based on the supply power.

2. The power device according to claim 1, wherein the voltage converting circuit compares a voltage of the system power with a threshold voltage, and determines whether to boost or pass the system power to generate the supply power according to a comparison result.

3. The power device according to claim 2, wherein the voltage converting circuit causes the system power to be equal to the supply power when a voltage of the system power is not less than the threshold voltage.

4. The power device according to claim 2, wherein the voltage converting circuit performs a boost operation to generate the supply power based on the system power when a voltage of the system power is less than the threshold voltage.

5. The power device according to claim 1, wherein the voltage converting circuit comprises:
a DC to DC boost converter, performing a boost action according to a pulse width modulation signal, generating the supply power based on the system power when a voltage of the system power is less than a threshold voltage.

6. The power device according to claim 5, wherein the DC to DC boost converter stops performing the boost action and by bypasses the system power to generate the supply power when a voltage of the system power is not less than the threshold voltage.

7. The power device according to claim 1, wherein the voltage converting circuit transmits the supply power to the power management circuit through a power transmission wire, the power device further comprises:
a capacitor, coupled between the power transmission wire and a reference voltage terminal.

8. An operation method of a power device, comprising:
providing a voltage converting circuit to determine whether to boost or pass system power to generate supply power according to a voltage magnitude of the system power; and
providing a power management circuit to generate at least one operation power to at least one application circuit based on the supply power.

9. The operation method according to claim 8, wherein determining whether to boost or pass the system power to generate the supply power according to the voltage magnitude of the system power comprises:
comparing a voltage of the system power with a threshold voltage, and determining whether to boost or pass the system power to generate the supply power according to a comparison result.

10. The operation method according to claim 9, further comprising:
causing the system power to be equal to the supply power when a voltage of the system power is not less than the threshold voltage; and
performing a boost operation to generate the supply power based on the system power when a voltage of the system power is less than the threshold voltage.

11. A wearable electronic device, comprising:
a power device and at least one application circuit, the power device providing at least one operation power to at least one application circuit,
wherein the power device comprises:
a voltage converting circuit, receiving system power and determining whether to boost or pass the system power to generate supply power according to a voltage magnitude of the system power; and
a power management circuit, coupled to the voltage converting circuit and generating the at least one operation power based on the supply power.

12. The wearable electronic device according to claim 11, wherein the voltage converting circuit compares a voltage of the system power with a threshold voltage, and determines whether to boost or pass the system power to generate the supply power according to a comparison result.

13. The wearable electronic device according to claim 12, wherein the voltage converting circuit causes the system power to be equal to the supply power when a voltage of the system power is not less than the threshold voltage; the voltage converting circuit performs a boost operation to generate the supply power based on the system power when a voltage of the system power is less than the threshold voltage.
